# FASCICULE DE BREVET EUROPEEN

(11) **EP 1 003 092 B1**
(45) Date de publication et mention de la délivrance du brevet: **21.05.2003**
(21) Numéro de dépôt: 99203753.1
(22) Date de dépôt: 15.02.1991
(51) Int. Cl.: G06F 3/147, G06K 17/00, H04B 5/00, G06F 17/60, H04B 1/16

(54) **Installation pour commander à distance l'affichage des prix dans un magasin**
Anlage zur Fernsteuerung von Preisanzeigen in einem Geschäft
Installation for remote control of price displays in a shop

(30) Priorité: 16.02.1990 FR 9001904
(43) Date de publication de la demande: 24.05.2000
(62) Demande divisionnaire de: 91400403.1
(73) Titulaire: Store Electronic Systems Electronic Shelf Label, 95870 Bezons (FR)
(72) Inventeur: Houdou, Michel, 49000 Angers (FR); Morineau, Jacques, 49125 Tierce (FR)
(74) Mandataire: Le Forestier, Eric

(56) Documents cités:
- DE-A- 3 534 652
- US-A- 4 449 248
- US-A- 4 523 332
- US-A- 4 821 291
- US-A- 4 857 917

## Description

La présente invention concerne d'une façon générale l'affichage d'information, en particulier de prix ou analogues dans des magasins de vente au détail, ou encore de données de stock et analogues, et elle concerne plus particulièrement une nouvelle installation comportant une pluralité de modules d'affichage ou étiquettes électroniques pouvant être commandés à distance, pour afficher des données variables.

On connaît déjà dans la technique antérieure un certain nombre d'installations de ce type.

Dans la plupart des installations connues, les étiquettes électroniques sont reliées à un ordinateur central de commande via une liaison par fils de type "bus", comprenant typiquement un fil d'alimentation pour les circuits électroniques des étiquettes et un ou plusieurs fils pour la transmission des données entre l'ordinateur et les étiquettes.

Du fait de la présence de ces câbles, ces installations sont malcommodes à utiliser, coûteuses et peu fiables. En outre, elles compliquent grandement les opérations de réagencement des magasins, car il faut alors se préocuper de modifier les trajets de câbles pour les adapter au nouvel aménagement.

On connaît par ailleurs, notamment par le brevet FR-A-2 604 315 un système de radiodiffusion bidirectionnelle entre une station centrale et des modules d'affichage individuels, dans laquelle les rayonnages métalliques pour les produits en vente sont utilisés pour effectuer un couplage électromagnétique entre une antenne d'émission et les modules individuels portés par lesdits rayonnages.

Une telle solution présente cependant certaines limitations. D'une part, tous les rayonnages doivent impérativement être réalisés en des métaux ou alliages susceptibles d'assurer le couplage. En outre, la disposition de l'antenne d'émission doit être conçue pour que des brins longent la surface supérieure de chaque rayonnage, ce qui est malcommode. De même, un réaménagement du magasin implique une reconstruction complète de l'antenne.

Enfin et surtout, les modules d'affichage de ce système connu comportent nécessairement deux antennes séparées pour la réception d'une porteuse et des informations proprement dites, ce qui accroît leur complexité et leur coût de revient.

La présente invention vise à pallier ces inconvénients de la technique antérieure et à proposer une installation qui soit économique, fiable et d'une grande souplesse vis-à-vis de réaménagements des surfaces de vente, avec une durée de vie importante de la batterie qui alimente chaque module d'affichage.

Elle propose à cet effet une installation telle que définie dans la revendication 1.

L'invention concerne également un module pour l'affichage d'informations tel que défini dans la revendication 10.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue d'ensemble schématique d'une installation de modules d'affichage selon la présente invention,
la figure 2 est un schéma-bloc d'un premier sous-ensemble d'une première partie de l'installation,
la figure 3 est un schéma-bloc d'un second sous-ensemble de ladite première partie,
la figure 4 est un schéma général d'une seconde partie de l'installation,
la figure 5 est un schéma-bloc d'un sous-ensemble de ladite seconde partie,
la figure 6 est un schéma général d'une troisième partie de l'installation,
la figure 7 est un schéma-bloc d'un sous ensemble de ladite troisième partie, et
la figure 8 est un chronogramme illustrant le fonctionnement de l'installation.

On indiquera tout d'abord que, d'une figure à l'autre, des éléments ou parties identiques ou similaires sont désignés par les mêmes numéros de référence.

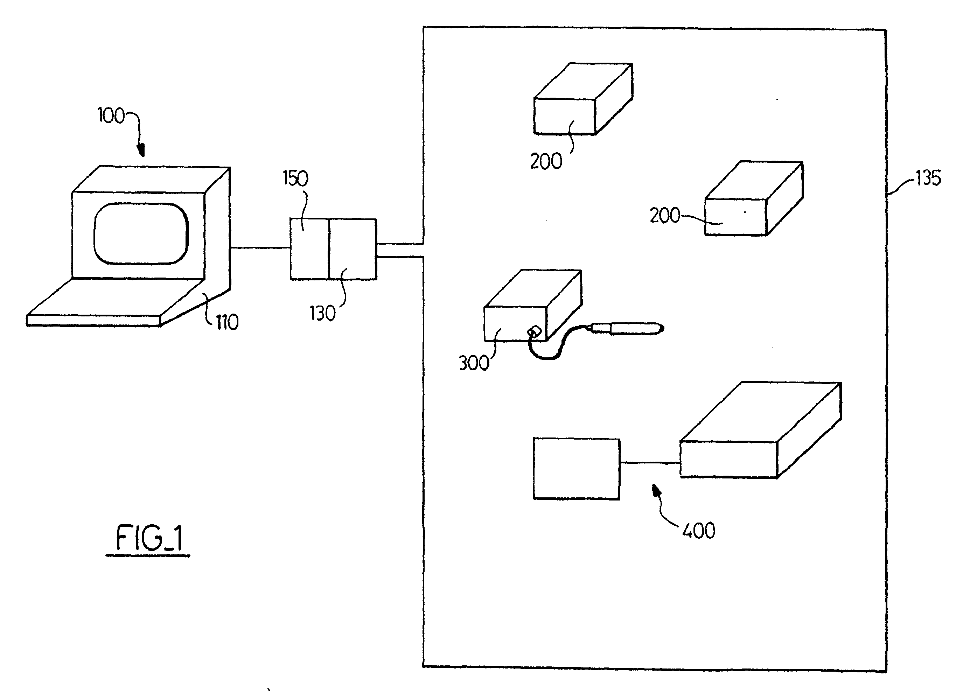

En référence tout d'abord à la figure 1, on a représenté une installation conforme à la présente invention, qui est destinée à être installée par exemple dans un supermarché d'alimentation. Elle comprend une unité centrale 100, comportant globalement un calculateur 110, un dispositif 130 d'émission de données par voie magnétique à l'aide d'une boucle de courant 135, ainsi qu'un dispositif 150 de gestion de l'émission, intercalé entre le calculateur et l'émetteur 130.

La boucle 135 est réalisée soit sous forme d'une boucle unique, comme illustré, soit sous la forme d'un ensemble de boucles, de manière à couvrir toute l'étendue du local dans lequel des dispositifs destinataires des données émises, qui seront décrits en détail plus loin, sont susceptibles de se trouver.

Ces dispositifs consistent en des modules individuels d'affichage ou étiquettes électroniques, indiqués en 200, qui sont capables à l'aide d'un circuit de réception approprié de recevoir les données émises par l'unité centrale, et plus généralement d'être paramétrées de manière à afficher sur un panneau par exemple à cristaux liquide des données de prix bien déterminées et modifiables concernant les produits auxquels elles. sont associées. Le nombre d'étiquettes 200 est choisi bien entendu en fonction du nombre de références que comporte le magasin, et peut être par exemple de quelques milliers.

L'installation comporte en outre un ou plusieurs terminaux portables 300, qui sont capables notamment de lire des codes-à-barres présents sur des produits et d'entrer en communication avec des étiquettes, de façon individuelle, pour paramétrer celles-ci notamment en y introduisant des données d'identification et de prix.

Enfin l'installation peut comporter, de façon facultative, un dispositif d'émulation 400 qui est apte à recevoir les données envoyées par l'unité centrale et/ou par un terminal portable et de fournir des indications quant au fonctionnement des divers moyens d'échange de données, à des fins de test et de diagnostic de l'installation.

Comme on le verra dans le détail par la suite, les deux fonctions principales de l'installation sont les suivantes : elle permet d'une part d'"initialiser" chaque étiquette électronique 200 à l'aide d'un terminal portable 300, fonction qui consiste à introduire dans une mémoire sauvegardée de ladite étiquette son identificateur, de préférence obtenu directement par lecture du code à barres du produit, et le cas échéant à introduire également des données de prix, et d'autre part de pouvoir mettre à jour à tout instant les données de prix affichées par les étiquettes, sous le contrôle de l'ordinateur central 100 et via les moyens d'émission/réception par couplage magnétique.

On va maintenant décrire dans le détail les divers éléments constitutifs de l'installation de l'invention.

### Unité centrale

L'unité centrale 100 comporte pour l'essentiel un calculateur 110, un émetteur fixe 130 et un gestionnaire d'émission 150.

Le calculateur peut être de type classique, et ne sera pas décrit en détail.

Typiquement, il contient dans une mémoire des données relatives à chaque produit référencé, identifié par exemple directement à l'aide de son code propre tel qu'il figure sous forme de code-à-barres sur le produit lui-même, ces données étant par exemple des données de prix par article, de prix par unité de poids ou de volume, de stock restant, etc...

Selon un aspect avantageux de l'invention, la transmission des données destinées à modifier l'affichage des étiquettes à partir de l'unité centrale s'effectue par voie hertzienne à très basse fréquence, l'émetteur consistant en une boucle de courant 135 accordée sur la fréquence de transmission par une capacité appropriée 136.

Il en résulte que les informations sont transmises pour l'essentiel sous forme d'un champ magnétique variable, la transmission s'effectuant par couplage magnétique entre la boucle d'émission 135, conçue de manière à couvrir l'ensemble du magasin, et des boucles de réception prévues respectivement dans les modules électroniques.

Les avantages d'une telle solution sont nombreux:
- l'onde émise tend à rester confinée à l'intérieur de la boucle;
- la proximité éventuelle de masses métalliques a peu d'influence sur le champ reçu par les étiquettes;
- une perturbation ou un brouillage volontaires de la transmission demandent des moyens d'une puissance considérable;
- la fréquence étant faible, la consommation et le prix de revient des récepteurs sont fortement réduits.

On opère avantageusement à une fréquence comprise entre environ 10 kHz et 150 kHz, de façon préférée de l'ordre de 30 à 50 kHz et de façon encore plus préférée de 35 à 45 kHz. De telles fréquences permettent de satisfaire au débit numérique exigé pour la liaison unité centrale/étiquettes électroniques.

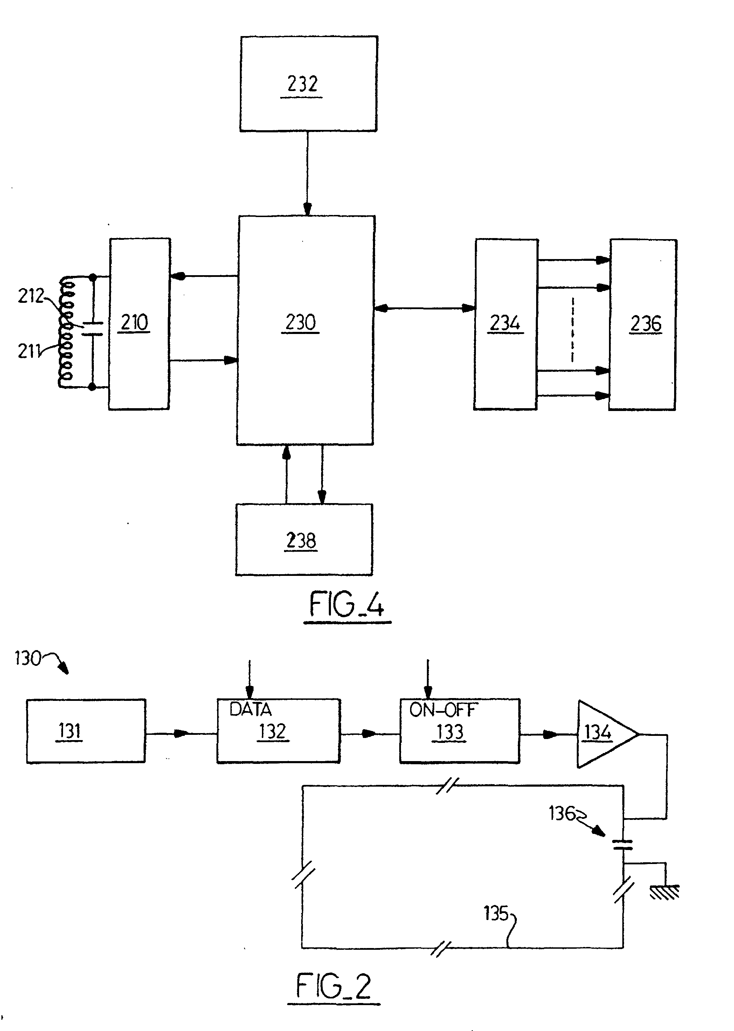

Avantageusement, la transmission des signaux s'effectue par modulation de fréquence (modulation dite "FSK"). Concrètement, et maintenant en référence à la figure 2, une telle modulation peut être effectuée par division de la fréquence d'un oscillateur à quartz 131 à l'aide d'un diviseur à rang variable 132. Ce diviseur 132 peut être suivi comme illustré, par un autre diviseur de rang constant 133 dont la sortie attaque une boucle de courant 135, associée à un condensateur d'accord 136 et formant antenne d'émission, par l'intermédiaire d'un amplificateur basse-fréquence 134 de puissance appropriée, intégrant un filtre actif passe-bande.

Si la sortie du diviseur 133 délivre des signaux parfaitement carrés, le filtrage en est sensiblement simplifié puisque le signal ne contient alors aucune harmonique de rang pair.

Par exemple, on peut utiliser un oscillateur à quartz d'une fréquence de l'ordre de 3 à 3,5 MHz, un diviseur 132 qui divise la fréquence du quartz par 10 ou par 11, selon le niveau logique du signal à transmettre qui est appliqué sur son entrée DATA, et une division par 8 en 133. Les fréquences haute et basse du signal modulé en FSK émis sont donc situées de part et d'autre d'une fréquence centrale comprise entre environ 35,7 et 41,6 kHz, selon la fréquence choisie pour le quartz 131.

De façon préférée, le diviseur à rang variable 132 est réalisé sous la forme d'un décompteur dont on vient prépositionner la valeur du compte à rebours à l'une ou l'autre des deux valeurs de diviseur, selon le niveau logique présent sur l'entrée DATA.

Par ailleurs, le second diviseur 133 comporte avantageusement une entrée de blocage ON/OFF, utilisable pour arrêter l'émission sans qu'il soit nécessaire d'intervenir sur les signaux de forte puissance en aval de l'amplificateur 134.

L'émetteur décrit ci-dessus est géré par un dispositif 150 associé au calculateur 100 et dénommé "gestionnaire de boucle".

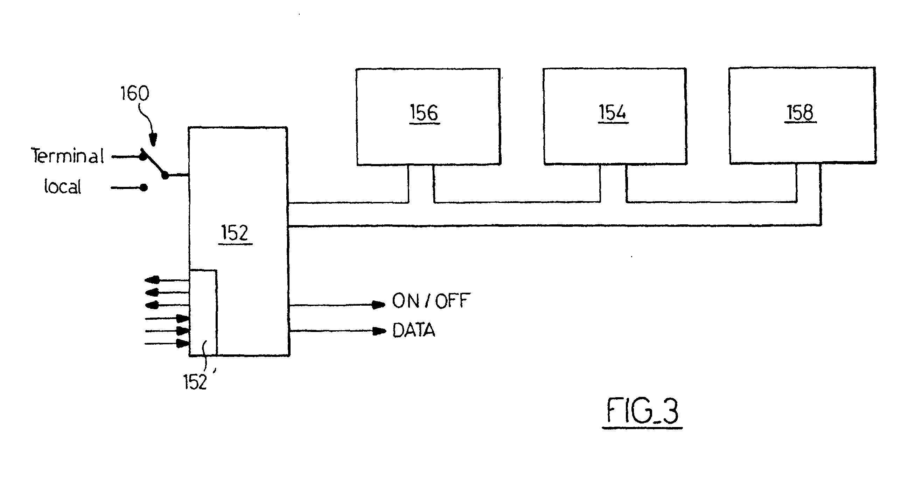

De façon préférée, et maintenant en référence à la figure 3, ce gestionnaire est articulé autour d'un micro-processeur 152 qui reçoit d'un côté les informations provenant du calculateur 110 et qui, de l'autre côté, envoie ces informations vers l'émetteur de boucle 130 (lignes DATA et ON/OFF).

Pour l'essentiel, le rôle du gestionnaire de boucle est de recevoir de l'ordinateur 110 les informations à émettre sous un format prédéfini, par exemple selon la norme V24, via une interface 152' par exemple de type RS232C, de les mémoriser dans une mémoire tampon 154 et de les appliquer à l'émetteur 130 en respectant un protocole bien déterminé que l'on va décrire plus bas. Le programme qui gère le fonctionnement du gestionnaire 150 est contenu dans une autre mémoire 156, tandis qu'une mémoire additionnelle 158 contient des séquences automatiques utilisables à des fins de test. A cet égard, un commutateur 160 peut être prévu pour faire passer le système d'un mode dit "terminal", dans lequel le gestionnaire exécute les ordres reçus de l'ordinateur 110 via la ligne RS232C, et un mode dit "local", dans lequel le gestionnaire peut fonctionner sans être relié à un ordinateur, en exécutant les séquences automatiques de test précitées.

### Etiquette

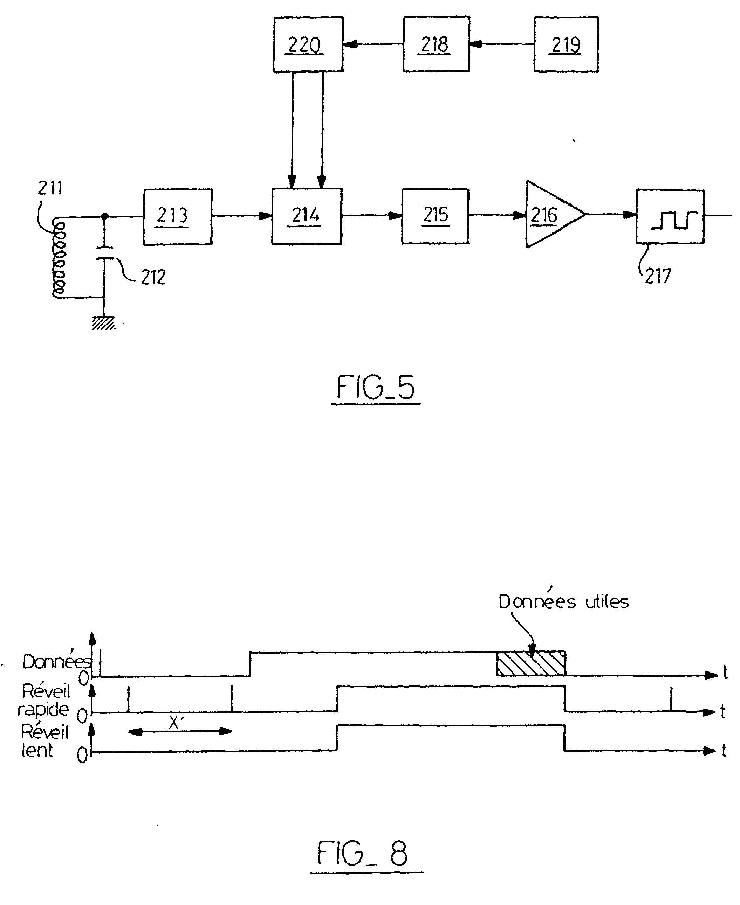

Maintenant en référence aux figures 4 et 5, chaque module électronique 200 comprend un circuit récepteur 210 qui comporte comme collecteur d'onde un cadre 211 accordé par un condensateur 212 sur la fréquence de transmission mentionnée plus haut. Ce cadre est relié à un filtre passe-bande 213, dont la sortie attaque un mélangeur 214 du type à commutation.

Il est prévu en outre un filtre 215 suivi par un amplificateur à gain élevé 216 monté en boucle ouverte; deux diodes tête-bêche peuvent être placées en contreréaction pour éviter la saturation.

L'amplificateur 216 est suivi d'un amplificateur écrêteur 217 qui amène les signaux à un niveau compatible avec les circuits logiques situés en aval.

Les oscillateurs locaux sont engendrés par division par quatre à partir d'une fréquence égale à quatre fois la fréquence à recevoir, qui est elle-même obtenue par divisions successives en 218 d'une référence délivrée par un oscillateur à quartz 219 résonnant par exemple à environ 5 MHz. Le diviseur par quatre 220 comprend par exemple deux bascules "D" bouclées de manière à délivrer deux ondes en quadrature. Ces deux ondes attaquent le mélangeur 214.

En variante, on peut utiliser pour le récepteur de l'étiquette un système à boucle à verrouillage de phase ("PLL") basé par exemple sur un circuit intégré de type XR-2211 commercialisé par la société Raytheon.

De retour à la figure 4, l'étiquette 200 comprend en outre un microprocesseur 230 qui est cadencé par une horloge 232 et qui gère un afficheur à cristaux liquides 236 par l'intermédiaire d'un microcontrôleur spécifique 234. De préférence, l'afficheur 236 comporte une première zone destinée à afficher le prix par article auquel l'étiquette est associée, et une seconde zone, préférentiellement plus petite, destinée à afficher le prix par unité de poids, de volume, etc.

Le microprocesseur 230 est choisi préférentiellement de manière à répondre aux critères suivants :
- consommation électrique faible,
- coût réduit,
- temps de cycle adapté à la vitesse de transmission des données, par exemple de l'ordre de 600 bauds,
- nombre d'entrées/sorties (en dehors des lignes de commande de l'afficheur) suffisamment nombreuses, et par exemple de l'ordre de 6.

Comme on le verra plus loin, les fonctions principales du module électronique sont :
- la réception et la mémorisation, dans une mémoire vive sauvegardée intégrée au microprocesseur, d'un code d'identification du module;
- la réception et la reconnaissance de-données de prix destinées en particulier à ce module, et
- l'affichage desdites données.

Ces fonctions sont réalisées à l'aide d'un programme contenu dans une mémoire 238 associée au microprocesseur 230 et qui peut mémoriser également les informations reçues.

L'antenne de réception ou collecteur d'ondes 211 est conçu en fonction des impératifs suivants:
- sa taille doit être restreinte;
- il doit être peu coûteux;
- il doit être efficace.

Cela étant, pour assurer que la tension recueillie soit maximale, on donnera aux enroulements la taille maximale, en restant dans les limites du boîtier du module d'affichage.

Par ailleurs, dans le but également d'accroître la tension recueillie et/ou de limiter le nombre de spires de l'enroulement, on choisit de préférence un noyau de ferrite dont la permittivité relative est la plus élevée possible.

### Terminal portable

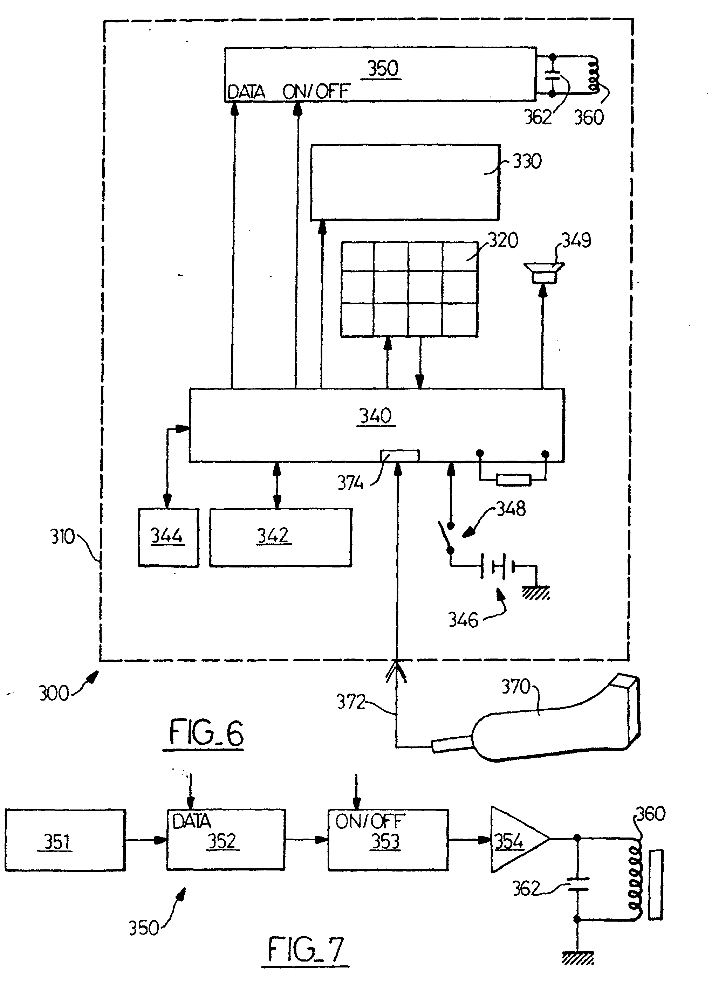

En référence maintenant aux figures 6 et 7, le terminal portable 300 comprend un boîtier 310 abritant un clavier 320 et un afficheur alphanumérique 330 par exemple à cristaux liquides.

Par exemple, le clavier 320 comprend seize touches, soit dix touches numériques, une touche "virgule", une touche d'annulation et quatre touches de fonctions.

L'afficheur 330 est par exemple un afficheur à deux lignes de seize caractères.

Un microprocesseur 340 est reliée par des ports d'entrée/sortie appropriés à l'afficheur 330 et au clavier 320. Il est également relié à un circuit d'émission 350 comportant les circuits appropriés de modulation et d'amplification et dont la sortie est reliée à une bobine d'émission 360 formant boucle de courant, accordée par une capacité 362. Une mémoire morte 342, par exemple de type "EEPROM", est connectée au microprocesseur par des bus appropriés et contient le programme qui régit le fonctionnement du terminal ainsi que des données pré-programmées. Une mémoire vive 344 est également prévue pour contenir les données destinées à être envoyées aux étiquettes (donnée d'identification et données de prix notamment). Une batterie d'alimentation 346 est reliée au système par un interrupteur marche-arrêt 348. Un avertisseur sonore 349, par exemple un vibreur, est également prévu à des fins expliquées plus loin.

Enfin un dispositif de lecture optique de codes-à-barres, par exemple un appareil lecteur couramment appelé "douchette" 370 ou encore un crayon optique, est relié au microprocesseur 340 par un câble 372 et une interface appropriée 374.

Le circuit d'émission 350 va maintenant être décrit en référence à la figure 7.

Cet émetteur doit rayonner une puissance électromagnétique relativement faible, car il faut éviter que, lors de l'initialisation ou de la modification d'une étiquette, les étiquettes voisines réagissent.

La modulation est effectuée par exemple selon le même principe que pour l'émetteur 130 associé à l'unité centrale, à savoir par division de la fréquence d'un oscillateur à quartz 351 à l'aide d'un diviseur à rang variable 352. Ce diviseur 352 peut être suivi comme illustré, par un autre diviseur de rang constant 353 dont la sortie attaque la bobine-cadre d'émission 360, associée au condensateur d'accord 362, par l'intermédiaire d'un amplificateur 354.

Un tel circuit est apte à délivrer les mêmes fréquences que le circuit décrit en référence à la figure 2, et présente les mêmes avantages.

Avantageusement, l'amplificateur 354 est constitué par un simple transistor NPN monté en émetteur commun, auquel est associée une diode permettant d'éviter que les deux bornes de la bobine ne soient court-circuitées lorsque le transistor entre en saturation.

Le transfert de données du terminal portable vers un module d'affichage 200 s'effectue en approchant l'antenne d'émission du terminal de l'antenne de réception du module, pour assurer un couplage magnétique satisfaisant.

Concrètement, avec une tension d'alimentation continue de +6 volts, on a pu obtenir une puissance suffisante pour réaliser le transfert d'informations vers une étiquette située à environ 5 cm du cadre du terminal portable.

Optionnellement, le terminal portable 300 peut comporter des moyens pour mémoriser toutes les opérations d'initialisation et de modification des étiquettes, telles qu'elles vont être décrites ci-dessous, en vue de fournir à l'ordinateur central, via une liaison par fils ou par couplage électromagnétique, des compte-rendus des opérations effectuées.

Le terminal, par conception appropriée du programme contenu dans sa mémoire morte 342, peut offrir par exemple les fonctions ci-dessous, qui sont présentées dans un menu principal à la mise sous tension du terminal:
- affichage du code-à-barres déjà mémorisé dans la mémoire vive du terminal portable pour vérification;
- entrée manuelle d'une valeur numérique égale au rapport prix au kilo/prix par article ou prix au litre/prix par article; cette opération peut se faire soit par appel sélectif d'une valeur parmi un ensemble de valeurs préalablement mémorisées, soit encore par l'entrée de la valeur au clavier; dans tous les cas, une validation doit être effectuée après le choix, par appui d'une certaine touche de fonction du clavier 320;
- entrée du prix de l'article à l'aide des touches numériques et de la touche "virgule" du clavier 320, avec correction des éventuelles erreurs par la touche d'annulation et validation finale par enfoncement d'une certaine touche de fonction;
- programmation de l'étiquette, c'est-à-dire chargement de données dans celle-ci; dans ce cas, un menu secondaire permet de choisir l'une des quatre fonctions suivantes:
   - PROG: permet la programmation dans l'étiquette de son identificateur (le code à barres lu) et du rapport prix au kilo (ou au litre)/prix par article;
   - PRIX: permet la programmation du prix de l'article; le prix apparaît alors sur l'afficheur 236 de l'étiquette, ainsi que le rapport précité si la fonction PROG a déjà été exécutée;
   - OFF: permet l'extinction de l'afficheur 236 de l'étiquette, afin de réduire sa consommation pendant les périodes de non-utilisation;
   - ON: permet de rétablir l'affichage.

Il est à noter que la fonction de lecture et de mémorisation du code à barres n'est pas présente dans le menu principal; en effet, cette fonction est remplie automatiquement; plus précisément, dès qu'une lecture de code à barres est effectuée par l'opérateur, un signal d'interruption ou analogue fait alors passer le microprocesseur en mode de réception et de mémorisation dudit code, qui est également affiché pour vérification. Cette procédure provoque également, de façon préférée, la remise à zéro des valeurs de prix et de rapport prix au kilo (ou au litre)/prix par article dans la mémoire vive 344 du terminal portable.

Il est à noter que les fonctions PROG, PRIX, OFF et ON du menu secondaire précité ne peuvent entrer en jeu qu'après que l'opérateur a rapproché le terminal portable suffisamment près de l'étiquette dont les données sont à modifier, par exemple à moins de 20 cm.

Et le transfert de données du terminal vers l'étiquette s'effectue en deux temps; tout d'abord a lieu la phase de réveil de l'étiquette, comme on va la décrire en détail plus loin, au cours de laquelle ladite étiquette indique sur son afficheur pendant courte une durée déterminée "CHARGEMENT ETIQUETTE"; suit alors la phase de transfert des données proprement-dite, pendant laquelle le message ci-dessus est affiché en permanence, tandis que l'avertisseur sonore 349 est activé.

A la fin du transfert, le terminal portable 300 se replace dans son état de départ, dans lequel l'avertissement sonore est arrêté le menu principal est affiché. Ce n'est qu'alors que le terminal portable peut être éloigné de l'étiquette.

### Réveil des étiquettes

Les données sont envoyées à chaque étiquette par l'unité centrale 100 ou par un terminal portable 300 selon un mode asynchrone. Une étiquette ne peut donc connaître à l'avance l'instant auquel un message (appelé par la suite "télégramme") va lui être adressé.

Mais pour des raisons liées à la consommation électrique, il est impossible que le récepteur de chaque module d'affichage soit constamment en état de veille.

Conformément à un aspect avantageux de la présente invention, la solution consiste à ne "réveiller" le récepteur de chaque module 200 que périodiquement, ledit récepteur devenant alors pendant une durée déterminée à l'écoute d'éventuels messages destinés au module associé. Concrètement, ce réveil périodique, toutes les X secondes et pendant une durée t, est réalisé par un cadencement approprié de la mise en- et hors-circuit du récepteur 210, réalisé par microprocesseur 230 du module 200.

Du côté de l'émetteur, et plus précisément du gestionnaire d'émission 150, chaque envoi de télégrammes à destination des modules d'affichage est précédé par un signal de réveil dont la durée est au moins égale à X secondes, afin de s'assurer que chaque récepteur 210 se détecte au moins une fois la présence du signal de réveil. Dans ce cas, le récepteur 210 se maintient à l'état de réveil pendant une durée donnée lui permettant de recevoir les données provenant de l'unité centrale.

Concrètement, on choisit pour une sécurité maximale une durée du signal de réveil égale à 2.X secondes.

La période X n'est pas simplement choisie de façon à être aussi longue que possible; en effet, on peut démontrer que, si n est le nombre moyen de messages émis par heure à destination d'un module d'affichage donné, et si le temps t sus-mentionné est de 0,1 seconde, la période optimale X pour minimiser la consommation du récepteur 210 est de l'ordre de √(240/n).

Pour minimiser encore la durée pendant laquelle le récepteur 210 est en éveil, on incorpore à chaque signal de réveil émis par l'unité centrale des messages de comptes à rebours, et plus précisément des données numériques indiquant le temps qui reste à s'écouler avant que les données utiles du télégramme n'arrivent.

Par exemple, on peut utiliser dans le signal de réveil de durée 2.X secondes 8 messages de compte à rebours, par exemple codés numériquement sur trois ou quatre bits, espacés régulièrement de 2.X/9 secondes au sein du signal de réveil.

De cette manière, lorsque le circuit de réception d'une étiquette est activé, il peut déterminer à partir de la valeur de compte-à-rebours courante reçue le temps qui va s'écouler avant que le flot de données proprement dites arrive. Le circuit de réception peut donc être désactivé jusqu'à cette arrivée. De cette manière, on minimise encore la durée pendant laquelle le circuit de réception est actif et l'on accroît la durée de vie de la pile.

Avec les valeurs ci-dessus, on peut démontrer que la consommation du récepteur est minimisée si l'on choisit X égal à environ √(6480/n).

On peut démontrer également que, dès que X est supérieur à 10 secondes, la consommation globale obtenue est égale ou inférieure à 1/10ème de la consommation globale sans compte à rebours.

En pratique, en prenant comme hypothèse un magasin contenant 15000 articles et donc 15000 modules d'affichage, dont les valeurs affichées doivent être remises à jour toutes les nuits, et en supposant également que l'unité centrale envoie au cours d'une nuit 150 télégrammes contenant chacun des données pour 100 modules d'affichage, et qu'un même envoi doit être répété trois fois pour s'assurer de sa bonne réception, on peut démontrer que la période X optimale est alors d'environ 37 secondes.

Dans ce cas, les signaux de réveil émis par l'unité centrale préalablement à tout envoi de données ont une durée de 74 secondes, et sont ponctués toutes les 8,2 secondes d'un message de compte-à-rebours.

Bien entendu, les données ci-dessus ne doivent pas être considérées comme limitatives.

Si la durée indiquée ci-dessus ne pose pas de problème pour une transmission d'informations transparente vis-à-vis des utilisateurs de l'installation, c'est-à-dire entre l'unité centrale et les modules, elle s'avère excessive pour une transmission d'informations d'un terminal portable 300 vers un module d'affichage 200, c'est-à-dire essentiellement dans le cadre de la programmation ou initialisation du module d'affichage.

Ainsi, selon un autre aspect de l'invention, on peut prévoir un moyen de réveil rapide de chaque module.

Dans ce cas, le circuit récepteur 210 de chaque étiquette est pourvu d'un circuit de détection d'un émetteur proche, par exemple sous la forme d'un circuit à seuil qui reçoit après traitement la tension recueillie par l'antenne de réception, et qui avertit le microprocesseur.

Le principal critère est ici le temps d'accès, et l'on peut concevoir le terminal portable pour qu'il émette un signal de réveil rapide d'une durée par exemple de deux secondes. Concrètement, le microprocesseur 230 est dans ce cas conçu pour activer selon une période X' déterminée le circuit de détection, et pour amener le récepteur 210 en éveil lorsque l'émission d'un signal de réveil rapide par le terminal portable et détectée. En pratique, on peut choisir X' environ égale à 800 ms.

Comme on le verra plus loin, cette fonction de réveil rapide, qui accroît la consommation en courant des circuits du module d'affichage, pourra avantageusement être inhibée automatiquement (par exemple la nuit et les jours de fermeture du magasin) à partir de l'unité centrale 100. En variante, la fonction de réveil rapide peut être inhibée en permanence, auquel cas l'accès au module d'affichage considéré depuis le terminal portable ne peut se faire qu'après avoir demandé expressément à l'ordinateur central d'annuler cette inhibition.

### Protocole de transmission

On peut distinguer plusieurs sortes de messages:
a) des messages de programmation des modules, incluant bien évidemment l'initialisation d'un module.
b) des messages de données. De façon préférée, chaque télégramme envoyé par l'émetteur central 130 comprend un ensemble de messages de données, et chaque message comprend un champ d'adresse et un champ de données. Le champ d'adresse est typiquement l'identificateur d'un module d'affichage, à savoir la donnée indiquée sous forme de code-à-barres sur le produit associé. Le champ de données comprend typiquement un prix par article ou un prix par unité de poids ou de volume.
c) des messages de caractérisation. Selon un autre aspect de l'invention, pour éviter que le récepteur 210 de chaque module d'affichage reste actif pendant toute la durée (qui peut être relativement longue) d'un télégramme, on peut faire précéder le corps d'un télégramme par un message dit de caractérisation comprenant par exemple les N premiers chiffres des identificateurs des modules concernés par ce télégramme. Ainsi l'étape de réveil d'un module déterminé est suivie immédiatement d'une étape de mémorisation de ces N chiffres et de comparaison avec les N premier chiffres de l'identificateur du module considéré. Si la correspondance n'est pas établie, alors le microprocesseur 230 est conçu pour "rendormir" le module, pour ainsi minimiser sa consommation, et ce jusqu'au réveil suivant.
   En outre, au cours d'un même télégramme, on peut envoyer un ou plusieurs autres messages de caractérisation, constituant chacun une sous-famille des messages caractérisés au début du télégramme.
d) des messages de compte-à-rebours, comme indiqué plus haut.
e) des messages d'inhibition. Ces messages ont pour but essentiel de minimiser la consommation des étiquettes. On peut citer notamment:
   - les messages d'inhibition du réveil dit rapide, comme expliqué plus haut;
   - les messages d'extinction et d'allumage de l'afficheur à cristaux liquides du module (instructions OFF et ON mentionnées plus haut dans la description du terminal portable;
   - les messages d'endormissement des modules, permettant d'inhiber la fonction de réveil périodique lent pendant une durée donnée; plus précisément, à la réception d'un tel message, le microprocesseur 230 peut effectuer un décomptage à partir d'une valeur donnée, et ne recommencer à écouter des éventuels signaux de réveil émis par l'unité central que lorsque le décompte atteint zéro.

Les messages d'inhibition s'adressent en principe à toutes les étiquettes qui sont à l'écoute. Mais en utilisant un message de caractérisation approprié, on peut sélectionner les étiquettes pour lesquelles une inhibition donnée sera effective.

Pour différencier les types de message, on peut prévoir dans chaque message une entête représentative du type de message considéré.

De façon préférée, chaque message est constitué d'un certain nombre de mots, chaque mot étant par exemple codé sur quatre bits et accompagné de trois bits de détection d'erreurs (code de Hamming ou analogue), le tout étant encadré par un bit de début de mot et trois bits de fin de mot. La transmission peut s'effectuer à une vitesse de l'ordre de 600 bauds, et de préférence selon une période qui est un multiple de la période d'horloge du microprocesseur de module 230.

L'adresse d'un module d'affichage est définie par deux informations, à savoir l'adresse du magasin associé, codée par exemple sur trois mots, et l'identificateur mentionné plus haut (code-à-barres lu), codé par exemple sur treize mots. Il est à noter que l'utilisation d'une adresse spécifique pour chaque magasin permet d'éviter que des interférences n'aient lieu entre deux magasins très voisins.

Par ailleurs, pour éviter une utilisation frauduleuse de l'installation, on peut brouiller une partie des informations transmises, par exemple par combinaison logique de certains mots avec un mot-clé modifiable ou non, qui peut être chargé dans chaque module d'affichage par le terminal portable lors de l'initialisation.

Pour illustrer le fonctionnement de l'installation de la présente invention, on a illustré schématiquement sur la figure 8 un chronogramme correspondant au processus complet d'une programmation de module par le terminal portable, avec signal de réveil rapide et télégramme utile (zone hachurée).

L'ensemble du protocole tel que détaillé ci-dessus est réalisé par une programmation appropriée d'une part du gestionnaire d'émission 150 qui fait partie de la station centrale 100, de seconde part du microprocesseur 340 qui régit le fonctionnement du ou de chaque terminal portable 300, et de troisième part du microprocesseur 230 qui régit le fonctionnement de chaque étiquette électronique.

### Fonctionnement général

Comme on l'a indiqué plus haut, l'initialisation d'une étiquette 200 s'effectue à l'aide du terminal portable 300 , auquel on fait lire le code à barres du produit auquel l'étiquette doit être associée, et qui est ensuite connecté à l'étiquette, de la manière indiquée plus haut, pour y introduire cette donnée, constituant dorénavant le code d'identification de l'étiquette, ainsi que d'autres telles que prix unitaire, prix au kilo, etc.

La mise à jour des données affichées par les étiquettes (essentiellement prix) s'effectue par la suite soit grâce à une transmission de données par voie magnétique entre l'unité centrale et les étiquettes, soit encore grâce au terminal portable.

Grâce aux aménagements tels que décrits plus haut relativement aux transferts d'informations entre les divers éléments de l'installation, et à la nature des informations susceptibles d'être transférés, on peut donner aux modules d'affichage une autonomie très longue, sans qu'il soit nécessaire de fréquemment remplacer leurs piles.

Des essais ont à cet égard été effectués par la Demanderesse avec les conditions suivantes :
- extinction des afficheurs à cristaux liquides de tous les modules d'affichage la nuit, de 22 heures à 9 heures, et en fin de semaine, du samedi à 21 heures au lundi à 9 heures;
- inhibition permanente de la fonction de réveil rapide, cette fonction n'étant autorisée que sur ordre spécifique et ponctuel de la part de l'ordinateur central;
- endormissement (inhibition du réveil lent) de tous les modules d'affichage du samedi à 21 heures au lundi à 9 heures;
- mise à jour des affichages de 500 modules par jour, avec des télégrammes concernant chacun 20 modules, et un taux de rejet des modules non concernés grâce aux messages de caractérisation atteignant 90%, et un triple envoi de chaque message.

Ces essais ont permis d'obtenir une consommation annuelle de l'ordre de 80 mA/H, ce qui permet de donner à chaque module une autonomie de plusieurs années avec des piles de dimensions modestes, sans par ailleurs que le couplage magnétique avec la station centrale n'ait à être utilisé pour effectuer un apport d'énergie.

Bien entendu, la présente invention n'est nullement limitée à la forme de réalisation décrite ci-dessus et représentée sur les dessins, mais l'homme de l'art saura y apporter toute variante ou modification conforme à l'étendue de protection définie par les revendications.

Ainsi il n'est pas impératif que chaque étiquette comporte son propre circuit de réception et les moyens, notamment de réveil, associés. Plus précisément, on peut prévoir un circuit de réception unique pour un groupe d'étiquettes tel que l'ensemble des étiquettes associées à une tablette de rayonnage.

De plus, l'installation décrite ci-dessus peut être complétée si nécessaire par des moyens d'émission d'informations des étiquettes vers la station centrale. Ces moyens peuvent être prévus soit dans chaque étiquette, soit dans un circuit spécifique associé à un groupe d'étiquettes.

Comme on l'a précédemment indiqué, la présente invention peut être utilisée avantageusement pour l'affichage de prix de vente dans un magasin, ou encore pour l'affichage de données de stocks (notamment quantité restante, quantité minimale, etc.) sur des lieux de stockage, de façon modifiable à distance. Mais il est clair que l'invention est utilisable dès que des informations de type quelconque que l'on doit pouvoir modifier à distance sont à afficher en une pluralité d'emplacements délocalisés.

## Revendications

1. Installation comprenant une station centrale (100) et une pluralité de modules d'affichage (200) destinés chacun à présenter sur un afficheur des informations reçues de la station centrale, notamment pour l'affichage de prix dans un magasin, **caractérisée en ce que** la station centrale comprend des moyens d'émission (130) par une boucle de courant (135) alimentée par un signal à basse fréquence modulé conformément aux informations à transmettre, **en ce qu'**il est prévu, en association avec chaque module d'affichage ou groupe de modules d'affichage, un circuit de réception (210), une antenne de réception (211) couplée électromagnétiquement avec la boucle de courant, et des moyens (230) pour activer seulement selon une période déterminée (X) et pendant une durée limitée le circuit de réception, **en ce que** chaque émission d'informations par la station centrale est précédée par l'émission d'un signal de réveil qui, lorsqu'il est détecté par le circuit de réception pendant une phase d'activation de celui-ci, provoque son maintien à l'état activé pendant au moins une partie de la durée pendant laquelle lesdites informations sont émises, **en ce que** le signal de réveil inclut une pluralité de signaux espacés dans le temps et contenant chacun une donnée de compte à rebours, et **en ce que** chaque circuit de réception comprend des moyens aptes, lorsque le circuit de réception à l'état activé reçoit l'un de ces signaux espacés dans le temps, à placer ledit circuit de réception dans l'état désactivé pendant une durée qui est fonction de la donnée de compte à rebours dudit signal.

2. Installation selon la revendication 1, **caractérisée en ce que** la durée du signal de réveil est de l'ordre du double de ladite période (X) d'activation du circuit de réception.

3. Installation selon l'une des revendications 1 et 2, **caractérisée en ce que** la période d'activation (X) est comprise entre 10 et 100 secondes.

4. Installation selon l'une des revendications 1 à 3, **caractérisée en ce que** chaque signal de réveil comprend huit signaux de données de compte à rebours régulièrement espacés.

5. Installation selon la revendication 4, **caractérisée en ce que** ladite période déterminée (X) est égale à environ √(6480/n), n étant le nombre moyen de messages émis par heure à destination d'un module d'affichage.

6. Installation selon l'une des revendications 1 à 5, **caractérisée en ce que** lesdites informations émises par la station centrale comprennent des données de prix et des données de commande.

7. Installation selon la revendication 6, **caractérisée en ce que** les données de commande comprennent des données pour désactiver temporairement le circuit de réception d'au moins une partie des modules d'affichage.

8. Installation selon l'une des revendications 6 et 7, **caractérisée en ce que** les données de commande comprennent des données pour éteindre ou allumer l'afficheur d'au moins une partie des modules d'affichage.

9. Installation selon l'une des revendications 1 à 8, **caractérisée en ce que** la fréquence centrale du signal basse fréquence est comprise entre environ 30 et 50 kHz, de préférence entre 35 et 45 kHz.

10. Module pour l'affichage d'informations, notamment d'un prix d'article en vente dans un magasin, destiné à réagir à un signal de réveil incluant une pluralité de signaux espacés dans le temps et contenant chacun une donnée de compte à rebours, module **caractérisé en ce qu'**il comprend :
- une unité centrale de traitement (230) à laquelle est associée une mémoire (238) ;
- un écran d'affichage (236) ;
- un circuit de réception (210), comportant une antenne de réception (211) pour des informations de prix ou analogue à afficher ;
l'unité centrale (230) étant conçue pour activer seulement selon une période déterminée (X) et pendant une durée limitée le circuit de réception et pour maintenir ledit circuit à l'état activé pendant une durée déterminée lorsqu'un signal de réveil est détecté par ledit circuit de réception pendant une phase d'activation, et le circuit de réception comprenant des moyens aptes, lorsque le circuit de réception à l'état activé reçoit l'un desdits signaux espacés dans le temps, à placer ledit circuit de réception (210) dans l'état désactivé pendant une durée qui est fonction de la donnée de compte à rebours dudit signal.

11. Module selon la revendication 10, **caractérisé en ce que** la période d'activation (X) est comprise entre 10 et 100 secondes.

12. Module selon l'une des revendications 10 et 11, **caractérisé en ce que**, pour un signal de réveil comprenant huit signaux de données de compte à rebours régulièrement espacés, ladite période déterminée (X) est égale à environ √(6480/n), n étant le nombre moyen de messages émis par heure à destination du module.

## Patentansprüche

1. Anordnung mit einer Zentralstation (100) und einer Vielzahl von Anzeigemodulen (200), die jeweils dazu bestimmt sind, an einer Anzeige Informationen darzustellen, die von einer Zentralstation empfangen werden, insbesondere zur Anzeige des Preises in einem Geschäft, **dadurch gekennzeichnet, dass** die Zentralstation Aussendeeinrichtungen (130) zum Aussenden über eine Stromschleife (135), welche mit einem Niederfrequenzsignal gespeist wird, das gemäß den zu sendenden Informationen moduliert ist, aufweist, dass in Zuordnung zu jedem Anzeigemodul oder jeder Gruppe von Anzeigemodulen eine Empfangsschaltung (210), eine Empfangsantenne (211), welche elektromagnetisch mit der Stromschleife gekoppelt ist, und Einrichtungen (230) zur Aktivierung der Empfangsschaltung nur in Übereinstimmung mit einer bestimmten Periode (X) und während einer beschränkten Zeitdauer vorgesehen sind, und dass jeder Aussendung von Informationen durch die Zentralstation eine Aussendung eines Wecksignals vorausgeht, welches, wenn es von der Empfangsschaltung während einer Aktivierungsphase dersel-. ben festgestellt wird, bewirkt, dass diese im aktiven Zustand während wenigstens eines Teils der Dauer gehalten wird, während welcher diese Informationen ausgesendet werden, dass das Wecksignal eine Anzahl von Signalen, die zeitlich im Abstand liegen und jeweils ein Rückzähldatum enthalten, einschließt, und dass jede Empfangsschaltung Einrichtungen aufweist, die geeignet sind, die Empfangsschaltung in den deaktivierten Zustand während einer Zeitdauer, die eine Funktion des Rückzähldatums des Signals ist, zu setzen, wenn die Empfangsschaltung im aktiven Zustand eines dieser zeitlich im Abstand liegenden Signale empfängt.

2. Einrichtung nach Anspruch 1, **dadurch gekennzeichnet, dass** die Dauer des Wecksignals von der Größenordnung des Doppelten der Aktivierungsperiode (X) der Empfangsschaltung ist.

3. Einrichtung nach einem der Ansprüche 1 und 2, **dadurch gekennzeichnet, dass** die Aktivierungsperiode (X) zwischen 10 und 100 Sekunden liegt.

4. Einrichtung nach einem der Ansprüche 1 bis 3, **dadurch gekennzeichnet, dass** jedes Wecksignal acht Rückzähldatensignale aufweist, die in regelmäßigen Abständen liegen.

5. Einrichtung nach Anspruch 4, **dadurch gekennzeichnet, dass** die bestimmte Periode (X) etwa gleich √(6480/n), wobei n die mittlere Anzahl von Nachrichten ist, die pro Stunde an einen mobilen Anzeigemodul ausgesendet werden.

6. Einrichtung nach einem der Ansprüche 1 bis 5, **dadurch gekennzeichnet, dass** die durch die Zentralstation ausgesendeten Informationen Preis- und Befehlsdaten aufweisen.

7. Einrichtung nach Anspruch 6, **dadurch gekennzeichnet, dass** die Befehlsdaten Daten zur vorübergehenden Deaktivierung der Empfangsschaltung wenigstens eines Teils der Anzeigemodule aufweisen.

8. Einrichtung nach einem der Ansprüche 6 und 7, **dadurch gekennzeichnet, dass** die Befehlsdaten Daten zum Ausgehen- oder Aufleuchtenlassen der Anzeige wenigstens eines Teils der Anzeigemodule aufweist.

9. Einrichtung nach einem der Ansprüche 1 bis 8, **dadurch gekennzeichnet, dass** die Mittelfrequenz des Niederfrequenzsignals zwischen etwa 30 und 50 kHz, vorzugsweise zwischen 35 und 45 kHz, liegt.

10. Modul zur Anzeige von Informationen, insbesondere des aktuellen Verkaufspreises in einem Geschäft, welcher für ein Reagieren auf ein Wecksignal bestimmt ist, welches eine Vielzahl von zeitlich im Abstand liegenden Signalen, die jeweils ein Rückzähldatum enthalten, einschließt, wobei der Modul **dadurch gekennzeichnet ist, dass** er
- eine Zentraleinheit (230), welcher ein Speicher (238) zugeordnet ist,
- einen Anzeigebildschirm (236),
- eine Empfangsschaltung (210), welche eine Empfangsantenne (211) für anzuzeigende Preis- oder dergleichen Informationen umfasst, aufweist,
wobei die Zentraleinheit (230) so eingerichtet ist, dass sie nur in Übereinstimmung mit einer bestimmten Periode (X) und während einer beschränkten Zeitdauer die Empfangsschaltung aktiviert und diese Schaltung während einer bestimmten Zeitdauer im aktiven Zustand hält, wenn ein Wecksignal durch die Empfangsschaltung während einer Aktivierungsphase festgestellt wird, und wobei die Empfangsschaltung (210) Einrichtungen aufweist, die geeignet sind, die Empfangsschaltung (210) in den deaktivierten Zustand während einer Zeitdauer, die eine Funktion des Rückzähldatums des Signals ist, zu setzen, wenn die Empfangsschaltung im aktiven Zustand eines dieser zeitlich im Abstand liegenden Signale empfängt.

11. Modul nach Anspruch 10, **dadurch gekennzeichnet, dass** die Aktivierungsperiode (X) zwischen 10 und 100 Sekunden liegt.

12. Modul nach irgendeinem der Ansprüche 10 und 11, **dadurch gekennzeichnet, dass** für ein Wecksignal, welches acht in regelmäßigen Abständen liegende Rückzählsignale aufweist, die bestimmte Periode (X) etwa gleich √(6480/n) ist, wobei n die mittlere Anzahl von Nachrichten ist, die pro Stunde an den Modul ausgesendet werden.

## Claims

1. An installation comprising a central station (100) and a plurality of display modules (200) each for presenting a display of information received from the central station, in particular in order to display prices in a shop, the installation being **characterized in that** the central station comprises transmitter means (130) operating via a current loop (135) powered by a low frequency signal modulated with the information to be transmitted, **in that** each display module or group of display modules is associated with a receiver circuit (210), a receiver antenna (211) electromagnetically coupled with the current loop, and means (230) for activating the receiver circuit only during a determined period (X) and for a limited length of time, **in that** each transmission of information from the central station is preceded by transmitting a wakeup signal which, on being detected by the receiver circuit during a stage while it is active causes it to maintain its active state for at least a portion of the time during which said information is transmitted, **in that** the wakeup signal comprises a plurality of signals spaced apart in time, each containing countdown data, and **in that** each receiver circuit has means suitable when the receiver circuit in the active state receives one of the time-spaced signals to place said receiver circuit in the deactivated state for a duration which is a function of the countdown data of said signal.

2. An installation according to claim 1, **characterized in that** the duration of the wakeup signal is about twice the duration of said activation period (X) of the receiver circuit.

3. An installation according to claim 1 or claim 2, **characterized in that** the activation period (X) lies in the range 10 seconds to 100 seconds.

4. An installation according to any one of claims 1 to 3, **characterized in that** each wakeup signal comprises eight regularly spaced-apart countdown data signals.

5. An installation according to claim 4, **characterized in that** said determined period (X) is equal to approximately √(6480/n), where n is the mean number of messages transmitted per hour to a display module.

6. An installation according to any one of claims 1 to 5, **characterized in that** said information transmitted by the central station comprises price data and control data.

7. An installation according to claim 6, **characterized in that** the control data comprises data for temporarily deactivating the receiver circuit of at least a fraction of the display modules.

8. An installation according to claim 6 or claim 7, **characterized in that** the control data comprises data for switching off or on the display of at least a fraction of the display modules.

9. An installation according to any one of claims 1 to 8, **characterized in that** the center frequency of the low frequency signal lies in the range approximately 30 kHz to 50 kHz, and preferably in the range 35 kHz to 45 kHz.

10. A module for displaying information, in particular a price for an article on sale in a shop, the module being designed to respond to a wakeup signal including a plurality of signals that are spaced apart in time, each containing countdown data, the module being **characterized in that** it comprises:
· a central processor unit (230) associated with a memory (238);
· a display screen (236); and
· a receiver circuit (210) comprising a receiver antenna (211) for receiving price information or the like to be displayed;
the central unit (230) being designed to activate the receiver circuit during only a determined period (X) and for a limited duration, and to maintain said circuit in the activated state for a determined duration when a wakeup signal is detected by said receiver circuit during an activated stage, and the receiver circuit comprises means suitable when the receiver in the active state receives one of said signals that are spaced apart in time, for placing said receiver circuit (210) in the deactivated state for a duration which is a function of the countdown data of said signal.

11. A module according to claim 10, **characterized in that** the activation period (X) is of duration lying in the range 10 seconds to 100 seconds.

12. A module according to claim 10 or claim 11, **characterized in that** for a wakeup signal comprising eight countdown signals that are regularly spaced apart, said determined period (X) is equal to approximately √(6480/n), where n is the mean number of messages transmitted per hour to the module.
